# EUROPEAN PATENT SPECIFICATION

(11) **EP 3 686 050 B1**
(45) Date of publication and mention of the grant of the patent: **29.10.2025**
(21) Application number: 19153443.7
(22) Date of filing: 24.01.2019
(51) Int. Cl.: B60L 58/26

(54) **PROTECTION FROM EMITTED BATTERY GAS IN CASE OF BATTERY FAILURE**
SCHUTZ VOR EMITTIERTEM BATTERIEGAS BEI BATTERIEFEHLER
PROTECTION CONTRE LE GAZ DE BATTERIE EMIS EN CAS DE DÉFAILLANCE DE LA BATTERIE

(43) Date of publication of application: 29.07.2020
(73) Proprietor: Samsung SDI Co., Ltd., Gyeonggi-do 17084 (KR)
(72) Inventor: Golubkov, Andrej, 8010 Graz (AT)
(74) Representative: Gulde & Partner

(56) References cited:
- CN-A- 104 417 380
- KR-A- 20160 104 867
- US-A1- 2015 065 026
- US-B2- 9 914 336
- ROD: "When to Use the Car's Recirculation Button - World Class Auto Repair", 30 July 2014 (2014-07-30), XP055796793, Retrieved from the Internet <URL:https://web.archive.org/web/20150328034751/https://worldclassautoservice.com/use-cars-recirculation-button/> [retrieved on 20210419]

## Description

### Field of the Invention

The present invention relates to a method for preventing the ingestion of ambient air contaminated with possibly harmful, toxic, or burnable battery gases into a passenger compartment of a vehicle in case of a battery failure. The invention is further directed to a system for preventing the ingestion of ambient air contaminated with battery gases into a passenger compartment of a vehicle in case of a battery failure.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

For meeting the dynamic power demands of various electrical consumers connected to the battery system, a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e. g. a SPI or CAN interface. The BMS/BMU may further communicate with each of the battery submodules, particularly with a cell supervision circuit (CSC) of each battery submodule. The CSC may be further connected to a cell connection and sensing unit of a battery submodule that interconnects the battery cells of the battery submodule.

Thus, the BMS/BMU is provided for managing the battery pack, such as by protecting the battery from operating outside its safe operating area, monitoring its state, calculating secondary data, reporting that data, controlling its environment, authenticating it and/or balancing it.

To provide thermal control of the battery pack, a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein. Then, not only the charging and discharging performance of the rechargeable may deteriorate and the life-span of the rechargeable battery may be shortened, but, in case of a serious battery failure, a so-called "thermal runaway" may occur, which may lead to the ejection of possible harmful substances from the inside of the affected battery cells (see below). Thus, a cell cooling system for effectively emitting/discharging/dissipating heat from the cells is advantageously installed for the battery pack or module(s).

Specifically, most automotive Li-ion battery packs consist of several cell modules. A typical automotive cell module consists of several stacked cells. To achieve a desired capacity and voltage of the module, busbars connect the cells electrically in series or in parallel. The modules may be further connected in series, until the desired system voltage of the battery pack is reached.

When a battery cell is heated above a critical temperature (typically above 150° C), it may transit into a thermal runaway. The initial heating may be caused by a local failure such as a cell internal short circuit, heating from a bad electrical contact, short circuit to a neighboring cell, or the like. Upon occurrence of a thermal runaway, the failed cell(s) may heat up to cell temperatures higher than 700°C. During the thermal runaway, large quantities of hot gas are ejected from inside of the failed cell(s) through the venting opening of the cell into the battery pack and from the battery pack to the outside of the car (vent-gas). Typically, the main components of vent-gas are H₂, CO₂, CO, electrolyte vapor and other hydrocarbons. Therefore, vent-gas is burnable and potentially toxic.

However, if the passenger compartment of the vehicle is equipped with a heating, ventilation, and air conditioning (HVAC) system, the vent-gas emitted to the ambient air in case of an occurrence of a thermal runaway in the vehicle's battery pack may be ingested by the air inlet of the HVAC system and then guided to the passenger compartment, thereby exposing passengers to danger due to the above-mentioned properties of the vent-gas.

US 2015/0,065,026 A1 describes a method including: detecting a battery fault of a battery of an electrified vehicle, activating a HVAC system ON, commanding the HVAC system to a fresh air mode, communicating fresh air into a passenger cabin, and expelling battery vent byproducts from the passenger cabin through at least one air extractor vent during key-on or key-off states.

CN 104 417 380 A concerns a battery management system and a method for a vehicle, the battery management system for a vehicle comprising: a detecting means for detecting whether a gas in the battery case of the vehicle is returned to the passenger compartment; and a control module configured for sending a control instruction for controlling a heating, ventilation, and air conditioning (HVAC) control system so as to increase the flow of air from the passenger compartment to the battery case.

KR 2016/0 104 867 A relates to a vehicle with a chargeable battery pack capable of ensuring safety of a passenger by efficiently discharging gas discharged from a battery cell to the outside of a vehicle to prevent toxic gas from being introduced into the inside of the vehicle.

Therefore, there is a need for a method and a system for preventing the ingestion, by an HVAC system, of ambient air contaminated with possibly harmful, toxic, or burnable battery gases (vent-gas) into a passenger compartment of a vehicle in case of a battery failure.

It is thus an object of the present invention to overcome or reduce at least some of the drawbacks of the prior art and to provide a method as well as a corresponding system for preventing the ingestion, by an HVAC system, of ambient air that may be contaminated with possibly harmful, toxic, or burnable battery gases (vent-gas) into a passenger compartment of a vehicle in case of a battery failure.

### Summary of Invention

One or more of the drawbacks of the prior art could be avoided or at least reduced by means of the present invention as disclosed by the independent claims. One of the ideas underlying the invention is to switch the heating, ventilation, and air conditioning system (throughout the following shortly referred to as "HVAC system") of a vehicle's passenger compartment into a recirculation mode upon detection of a serious battery failure.

Embodiments of the present disclosure seek to solve at least one of the problems existing in the prior art to at least some extent.

One aspect of the present invention is related to a method for preventing the ingestion of contaminated ambient air into a passenger compartment of an electric or hybrid vehicle, wherein the vehicle comprises: a passenger compartment; a battery pack having a plurality of batteries; a battery management unit; a central control unit; an HVAC system for the passenger compartment; wherein the HVAC system has: a control unit for the HVAC system (in the following referred to as "HVAC control unit"), an air inlet, an outside inlet for ingesting ambient air, an inside inlet for ingesting air from the interior of the passenger compartment. The method comprises the steps:
a) Detecting, by the battery management unit, whether at least one of the batteries of the battery pack is in or gets into an abnormal or dangerous state.
b) Transmitting, by the battery management unit, a first signal to the central control unit upon detection of an abnormal or dangerous state according to step a).
c) Transmitting, by the central control unit upon receiving the first signal, a second signal to the HVAC control unit.
d) Switching, by the HVAC control unit upon receiving the second signal and if the air inlet is connected to the outside inlet, the air inlet of the HVAC system from being connected to the outside inlet to being connected to the inside inlet.

In other words, upon the detection of an abnormal or dangerous state such as a thermal runaway (see above) of at least one of the battery cells, the method switches the HVAC system into an air circulation mode, in which only air that is already inside the passenger compartment is drawn in by the HVAC system and then again supplied to the passenger compartment. An exchange with ambient air - that may be mixed with possibly harmful vent-gas ejected by the battery pack - is thus avoided.

The detection of an abnormal or dangerous state (such as a thermal runaway) of battery cells may be performed, e. g., by measuring the temperature and/or the voltage of the battery pack, the battery module(s), and/or the battery cell(s). Another way of detecting an abnormal or dangerous state (such as a thermal runaway) of battery cell(s) is the measurement of the pressure and/or gas composition inside the battery pack.

According to one embodiment of the method according to the invention, the method comprises a further step of stopping, after the connection of the air inlet to the inside inlet according to step d), the HVAC system. This has, e. g., the advantage of saving energy.

In one embodiment, the method comprises a further step of sending, by the central control unit after receiving the first signal, a third signal to an HVAC system of the battery pack (which may be different to the afore-mentioned HVAC system connected to the passenger compartment). Upon receiving the third signal, the HVAC system of the battery pack starts cooling down the batteries.

In one embodiment, the method comprises a further step of sending, by the central control unit after receiving the first signal, the third signal to an extinction system to extinguish a possible fire in the battery pack. Sending the third signal to an extinction system may be performed alternatively to or additional to sending the third signal to the HVAC system of the battery pack.

According to one embodiment, the method comprises a further step of outputting, after the detection of at least one of the batteries of the battery pack being in or getting into an abnormal or dangerous state (e. g., a thermal runaway), an alarm in the passenger compartment. Preferably, the alarm outputted in the passenger compartment is a visible (optical) alarm. Alternatively or additionally, the alarm outputted in the passenger compartment may be an audible (acoustical) alarm.

According to another aspect of the present invention, a system for preventing the ingestion of contaminated ambient air into a passenger compartment of an electric or hybrid vehicle with a passenger compartment and a battery pack having a plurality of batteries is provided. The system comprises: a battery management unit; a central control unit; and an HVAC system for the passenger compartment. The HVAC system has: an HVAC control unit, an air inlet, an outside inlet for ingesting ambient air, and an inside inlet for ingesting air from the interior of the passenger compartment. The air inlet of the HVAC system is switchable between a state of being connected to the outside inlet and a state of being connected to the inside inlet. Further, the battery management unit is configured for detecting, whether at least one of the batteries of the battery pack is in or gets into an abnormal or dangerous state. The battery management unit is further configured for transmitting, upon detection of an abnormal or dangerous state according to step a), a first signal to the central control unit. The central control unit is configured for transmitting, upon receiving the first signal, a second signal to the control unit of the HVAC system (in the following referred to as "HVAC control unit"). The HVAC control unit is configured to switch, upon receiving the second signal and if the air inlet is connected to the outside inlet, the air inlet of the HVAC system from being connected to the outside inlet to being connected to the inside inlet.

In other words, upon the system is configured such that upon detection of an abnormal or dangerous state, e. g., a thermal runaway (see above) of at least one of the battery cells, the system switches the HVAC system into an air circulation mode, in which only air that is already inside the passenger compartment is drawn in by the HVAC system and then again supplied to the passenger compartment. An exchange with ambient air - that may be mixed with possibly harmful vent-gas ejected by the battery pack - is thus avoided.

The detection of an abnormal or dangerous state (such as a thermal runaway) of battery cells may be performed, e. g., by measuring the temperature and/or the voltage of the battery pack, the battery module(s), and/or the battery cell(s). Another way of detecting an abnormal or dangerous state (such as a thermal runaway) of battery cell(s) is the measurement of the pressure and/or gas composition inside the battery pack.

In one embodiment of the system according to the invention, the air inlet comprises a switch for switching between a state, wherein the air inlet is connected to the outside inlet, and a state, wherein the air inlet is connected to the inside inlet.

In one embodiment of the system, the switch is a switch valve. The switch valve is preferably a switchable air valve.

In one embodiment of the system, the switch comprises: a first valve for opening and closing a connection of the outside inlet to the air inlet and a second valve for opening and closing a connection of the inside inlet to the air inlet. In one state of the switch, the first valve has opened the connection of the outside inlet to the air inlet and the second valve has closed the connection of the inside inlet to the air inlet. In another state of the switch, the first valve has closed the connection of the outside inlet to the air inlet and the second valve has opened the connection of the inside inlet to the air inlet. The first and/or the second valve is preferably an air valve.

In one embodiment of the system, the air inlet comprises a filter. The filter may be suitable for filtering pollutants and/or toxic substances out of the air drawn in through the air inlet.

In one embodiment of the system, the air inlet comprises a fan for sucking air through the air inlet.

In one embodiment of the system, the air inlet comprises a ventilation outlet for supplying the air sucked through the air inlet to the passenger compartment.

In one embodiment of the system, the HVAC control unit is further configured for stopping the HVAC system after a connection of the air inlet to the inside inlet has been established. This has, e. g., the advantage of saving energy.

In one embodiment of the system, the battery pack comprises an HVAC system. The HVAC system of the battery pack is configured: to receive a signal from the central control unit; and to cool down, after receiving a signal from the central control unit, the batteries.

In one embodiment of the system, the battery pack comprises an extinction system, the extinction system of the battery pack being configured: to receive a signal from the central control unit; and to extinguish a possible fire of the battery pack or in the battery pack.

In one embodiment of the system, the system further comprising at least one alarm means installed in the passenger compartment. The at least one alarm means is configured for outputting, after the detection of at least one of the batteries of the battery pack being in or getting into an abnormal or dangerous state, an alarm in the passenger compartment.

In one embodiment of the system, at least one alarm means is configured to output a visible/optical alarm.

In one embodiment of the system, at least one alarm means is configured to output an audible/acoustical alarm.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates schematically an electric or hybrid vehicle with a typical HVAC system for the passenger compartment according to the state of the art;
- Fig. 2: illustrates schematically an electric or hybrid vehicle with a system for preventing the ingestion of contaminated ambient air into a passenger compartment according to an embodiment of the invention;
- Fig. 3: illustrates schematically a system for preventing the ingestion of contaminated ambient air into a passenger compartment according to an embodiment of the invention; and
- Fig. 4: illustrates schematically a system for preventing the ingestion of contaminated ambient air into a passenger compartment according to a further embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that when an element or layer is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

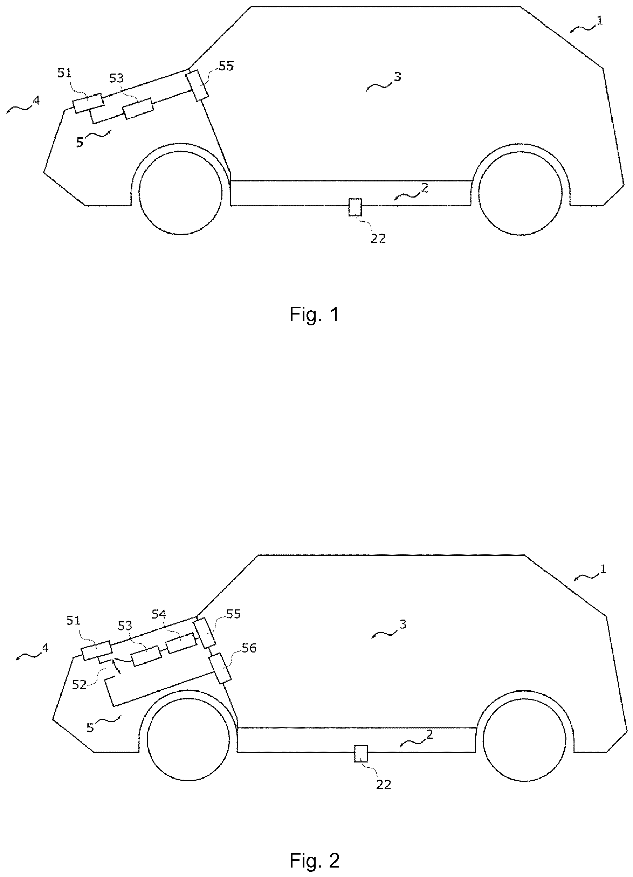

Fig. 1 is a schematic sketch of an electric or hybrid vehicle with a typical HVAC system for the passenger compartment according to the state of the art. The vehicle 1, for example, a car, comprises a passenger compartment 3. The heating, ventilation, and/or air conditioning of the passenger compartment 3 is controlled by a so-called "heating, ventilation, and air conditioning system," shortly referred to as "HVAC system" throughout the present specification.

The HVAC system 5 comprises an outside inlet 51 for ingesting ambient air 4 from the outside of the vehicle. The ingestion is performed, for example, via an air pump, ventilator, or fan 53 suitable for sucking air. Finally, the air ingested from the outside is then supplied to the passenger compartment 3 via a ventilation outlet 55.

A battery pack 2 as described in the introductory part of the specification is arranged in the bottom area of the electric or hybrid vehicle 1. The battery pack 2 is controlled and monitored by a battery management unit (BMU; not shown in Fig. 1). A venting port 22 is arranged, for example on the bottom side of the vehicle 1, to enable ventilation or air exchange of the battery pack 2 with ambient air 4.

In case of a thermal runaway or even a battery fire, large volumes of potentially harmful combustion gas (vent-gas) are emitted by the battery pack 2 through the venting port 22 into the ambient air 4. Then, however, the combustion gas may be ingested through the outside inlet 51 and the fan 53 by the HVAC system 5 of the vehicle 1 from the outside and released through the ventilation outlet 55 into the inside of the vehicle 1 into the passenger compartment 3. The combustion gas would be harmful to passengers inside the passenger compartment.

Fig. 2 is a schematic illustration of a vehicle with a system for preventing the ingestion of contaminated ambient air into a passenger compartment according to an embodiment of the invention.

In addition to the components explained in the context of Fig. 1, the HVAC system 5 comprises an inside inlet 56 for ingesting air from the interior of the vehicle's passenger compartment 3. Therefore, the inside inlet 56 is connected via a switch 52 with the fan 53 suitable for sucking the air, via the inside inlet 56, from the inside of passenger compartment 3 and supplying the air, via the ventilation outlet 55, again into passenger compartment 3, when the switch 52 is in a state connecting the fan 53 with the inside inlet 56.

However, in a normal operation mode, the switch 52 does not connect the fan 53 with the inside inlet 56, but with the outside inlet 51 so as to draw in ambient air 4 from the outside of the vehicle 1. This operation mode corresponds essentially to the operation as described above with reference to Fig. 1 in the context of the prior art. However, according to the system of the invention, the switch can be switched so as to connect the fan 53 with the inside inlet 56 as described above. In this state of the switch, the HVAC system 5 runs in a "recirculation mode," i. e., an air stream is established in the passenger compartment 3 of the vehicle 1 by ingesting air via the inside inlet 56 from the passenger compartment 3 and supplying via the ventilation outlet 55 to the passenger compartment 3, however, any air exchange with ambient air 4 is inhibited.

Running the HVAC system 5 in the "recirculation mode" is meaningful in any cases, wherein it is undesirable to have an air exchange between the air in the passenger compartment 3 and the ambient air 4. In particular, it is undesirable to have such an air exchange in case of contamination of the ambient air with combustion gas ejected in case of a thermal runaway or even a battery fire occurring in the battery pack 2 of the vehicle 1 for the reasons as described above.

Thus, according to the system and the method of the invention, it is detected whether or not the battery pack 2 - i. e, at least one of the batteries comprised in the battery pack 2 - is in or gets into an abnormal or dangerous state. An abnormal or dangerous state is in particular any state of the battery pack or at least one of its batteries, wherein the probability of a thermal runaway or a battery fire exceeds a predetermined threshold value. Of course, this includes the case that the event of a thermal runaway or even a battery fire in the vehicle's battery pack 2 has already occurred.

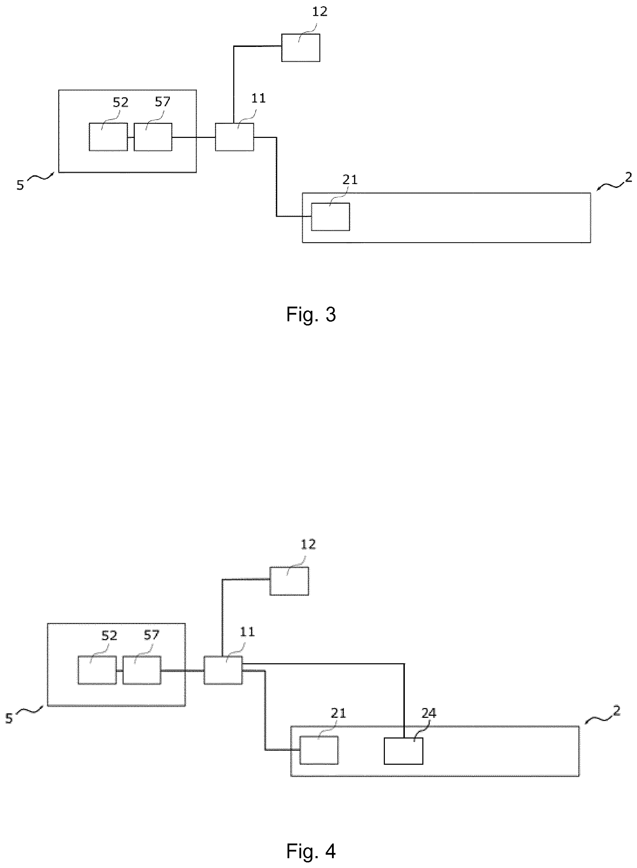

To that end, the state of the battery pack must be permanently monitored by the BMU 21 as depicted in Fig. 3. In Fig. 3, an embodiment of the system according the invention for preventing the ingestion of contaminated ambient air into a passenger compartment of an electric or hybrid vehicle is shown schematically. Once the BMU 21 detects an abnormal or dangerous state as described above in the battery pack, for example, by measuring the temperature of the latter using state-of-the-art temperature sensors, the BMU 21 sends a first signal (a first warning signal) to the central control unit (CCU) 11 of the vehicle 1.

Then, the CCU 11 is informed about the abnormal or dangerous state of the battery pack 2 and can thus start one or a series of suitable operations. According to the invention, it is required that at least the control unit 57 of the HVAC system 5 (in the following referred to as "HVAC control unit") is informed by sending a second signal (a second warning signal) from the CCU 11 to the HVAC control unit 57 to trigger the latter to switch into the recirculation mode.

Additionally, as illustrated in Fig. 4, the CCU 11 may also send a third signal to an HVAC system 24 of the battery pack 2 and/or to an extinction system to extinguish a possible fire. When the HVAC system 24 of the battery pack 2 receives the third signal from the CCU 11, the HVAC system 24 of the battery pack 2 may cool down the batteries. Note that the HVAC system 24 of the battery pack 2 is typically different and independent from the HVAC system 5 for the passenger compartment 3.

Additionally, the CCU 11 may also trigger one or more alarm means in the passenger compartment 3 to prompt alarm(s) 12, i. e., warning signals, therein so as to warn and inform passengers about the abnormal or dangerous state of the battery pack 2. The alarm(s) may occur in form of visible / optical signals such as lighting up an LED or a warning message or a warning symbol on the vehicle's dashboard or elsewhere in the passenger compartment. Alternatively or additionally to the visible / optical alarm(s), the alarm(s) may also occur in form of audible / acoustical signals such as a beep or a spoken message audible in the passenger compartment 3. The passengers may then decide to stop and leave the car as soon as it is possible.

Additionally, alarm(s) may also occur so as to be perceptible in the environment of the car. This way, people in the vicinity of the vehicle 1 can be warned. For example, the driver of a following car may be warned and may then increase the driving distance to the vehicle 1 or stop his car.

The CCU 11 may also put the vehicle 1 in an emergency mode.

For example, one or more filters 54 may be activated. The one or more filters 54 may be arranged in the connection between the fan 53 and the ventilation outlet 55 (as shown in Fig. 2) and/or between the inside inlet 56 and the switch 52 and/or the switch 52 and the fan 53. The activation of filter(s) during the operation of the recirculation mode has the advantage that vent-gas already - maybe unnoticed by the passengers - having entered the passenger compartment 3, or at least certain components of such vent-gas, are filtered out by the circulation of air through the one or more filters 54.

Upon receiving the second signal from the CCU 11, the HVAC control unit 57 then controls the switch 52 to switch into a state, which connects the fan 53 with the inside inlet 56. Of course, the latter step can be omitted, if and only if the switch is already in the state connecting the fan 53 with the inside inlet 56 for any reasons. In other words, as soon as an abnormal or dangerous state is detected in the battery pack, the vehicle automatically switches the air conditioning system to air recirculation, thus preventing any released toxic gas from entering into the passenger compartment, and thus increasing the safety of the passengers of the vehicle.

### Reference signs

- 1: vehicle, e. g. a car
- 2: battery pack
- 3: passenger compartment
- 4: ambient air
- 5: HVAC system for the passenger compartment

- 11: central control unit (CCU) of the vehicle
- 12: alarm means

- 21: battery management unit (BMU)
- 22: venting port of the battery pack
- 24: HVAC system of the battery pack
- 51: outside inlet
- 52: switch valve
- 53: fan
- 54: filter(s)
- 55: ventilation outlet
- 56: inside inlet
- 57: HVAC control unit

## Claims

1. A method for preventing the ingestion of contaminated ambient air (4) into a passenger compartment (3) of a vehicle (1), the vehicle (1) comprising: a passenger compartment (3); a battery pack (2) having a plurality of batteries; a battery management unit (21); a central control unit (11); an HVAC system (5) for the passenger compartment (3); wherein the HVAC system (5) has: an HVAC control unit (57), an air inlet, an outside inlet (51) for ingesting ambient air (4), an inside inlet (56) for ingesting air from the interior of the passenger compartment (3); wherein the method comprises the steps:
a) detecting, by the battery management unit (21), whether at least one of the batteries of the battery pack (2) is in or gets into an abnormal or dangerous state;
b) transmitting, by the battery management unit (21), a first signal to the central control unit (11) upon detection of an abnormal or dangerous state according to step a);
c) transmitting, by the central control unit (11) upon receiving the first signal, a second signal to the HVAC control unit (57);
the method being **characterized by** the step of:
d) switching, by the HVAC control unit (57) upon receiving the second signal and if the air inlet is connected to the outside inlet (51), the air inlet of the HVAC system (5) from being connected to the outside inlet (51) to being connected to the inside inlet (56).

2. The method according to claim 1, comprising the further step of:
- stopping, after the connection of the air inlet to the inside inlet (56) according to step d), the HVAC system (5).

3. The method according to claim 1 or 2, comprising the further step of:
- sending, by the central control unit (11) after receiving the first signal, a third signal to an HVAC system (24) of the battery pack (2) to cool down the batteries and/or to an extinction system to extinguish a possible fire.

4. The method of any one of the preceding claims, comprising the further step of:
- outputting, after the detection of at least one of the batteries of the battery pack (2) being in or getting into an abnormal or dangerous state, an alarm in the passenger compartment (3).

5. The method of claim 4, wherein the alarm outputted in the passenger compartment (3) is a visible alarm and/or an audible alarm.

6. A system for preventing the ingestion of contaminated ambient air (4) into a passenger compartment (3) of a vehicle (1) with a passenger compartment (3) and a battery pack (2) having a plurality of batteries, the system comprising:
- a battery management unit (21);
- a central control unit (11);
- an HVAC system (5) for the passenger compartment (3), the HVAC system (5) having: an HVAC control unit (57), an air inlet, an outside inlet (51) for ingesting ambient air (4), an inside inlet (56) for ingesting air from the interior of the passenger compartment (3);
wherein the air inlet of the HVAC system (5) is switchable between a state of being connected to the outside inlet (51) and a state of being connected to the inside inlet (56); and
wherein:
- the battery management unit (21) is configured for detecting, whether at least one of the batteries of the battery pack (2) is in or gets into an abnormal or dangerous state;
- the battery management unit (21) is further configured for transmitting, upon detection of an abnormal or dangerous state according to step a), a first signal to the central control unit (11);
- the central control unit (11) is configured for transmitting, upon receiving the first signal, a second signal to the HVAC control unit (57); and
**characterized in that**
- the HVAC control unit (57) is configured to switch, upon receiving the second signal and if the air inlet is connected to the outside inlet (51), the air inlet of the HVAC system (5) from being connected to the outside inlet (51) to being connected to the inside inlet (56).

7. The system according to claim 6,
wherein the air inlet comprises a switch for switching between a state, wherein the air inlet is connected to the outside inlet (51), and a state, wherein the air inlet is connected to the inside inlet (56).

8. The system according to claim 7, wherein the switch is a switch valve (52).

9. The system according to claim 7, wherein the switch comprises:
- a first valve for opening and closing a connection of the outside inlet (51) to the air inlet;
- a second valve for opening and closing a connection of the inside inlet (56) to the air inlet;
wherein in one state of the switch, the first valve has opened the connection of the outside inlet (51) to the air inlet and the second valve has closed the connection of the inside inlet (56) to the air inlet; and
wherein in another state of the switch, the first valve has closed the connection of the outside inlet (51) to the air inlet and the second valve has opened the connection of the inside inlet (56) to the air inlet.

10. The system according to any one of claims 6 to 9, wherein the air inlet further comprises at least one of:
- a filter (54) for filtering pollutants and/or toxic substances out of the air drawn in through the air inlet;
- a fan (53) for sucking air through the air inlet;
- a ventilation outlet (55) for supplying the air sucked through the air inlet to the passenger compartment (3).

11. The system according to any one of claims 6 to 10, wherein the HVAC control unit (57) is further configured for stopping the HVAC system (5) after a connection of the air inlet to the inside inlet (56) has been established.

12. The system according to any one of claims 6 to 11, wherein the battery pack (2) comprises an HVAC system (24), the HVAC system (24) of the battery pack (2) being configured:
- to receive a signal from the central control unit (11); and
- to cool down, after receiving a signal from the central control unit (11), the batteries.

13. The system according to any one of claims 6 to 12, wherein the battery pack (2) comprises an extinction system, the extinction system of the battery pack (2) being configured:
- to receive a signal from the central control unit (11); and
- to extinguish a possible fire of the battery pack (2) or in the battery pack (2).

14. The system according to any one of claims 6 to 13, further comprising at least one alarm means installed in the passenger compartment (3),
wherein the at least one alarm means is configured for outputting, after the detection of at least one of the batteries of the battery pack (2) being in or getting into an abnormal or dangerous state, an alarm in the passenger compartment (3).

15. The system according to claim 14, wherein one alarm means is configured to output a visible alarm, and/or one alarm means is configured to output an audible alarm.

## Patentansprüche

1. Verfahren zum Verhindern des Ansaugens von kontaminierter Umgebungsluft (4) in einen Fahrgastraum (3) eines Fahrzeugs (1), wobei das Fahrzeug (1) Folgendes umfasst: einen Fahrgastraum (3); einen Batteriepack (2) mit mehreren Batterien; eine Batteriemanagementeinheit (21); eine zentrale Steuereinheit (11); ein HLK-System (5) für den Fahrgastraum (3); wobei das HLK-System (5) Folgendes aufweist: eine HLK-Steuereinheit (57), einen Lufteinlass, einen Außeneinlass (51) zum Ansaugen von Umgebungsluft (4), einen Inneneinlass (56) zum Ansaugen von Luft aus dem Inneren des Fahrgastraums (3); wobei das Verfahren die folgenden Schritte umfasst:
a) Erkennen durch die Batteriemanagementeinheit (21), ob sich mindestens eine der Batterien des Batteriepacks (2) in einem abnormalen oder gefährlichen Zustand befindet oder in einen solchen gerät;
b) Senden eines ersten Signals durch die Batteriemanagementeinheit (21) bei Erkennung eines abnormalen oder gefährlichen Zustands gemäß Schritt a) an die zentrale Steuereinheit (11);
c) Senden eines zweiten Signals durch die zentrale Steuereinheit (11) bei Empfang des ersten Signals an die HLK-Steuereinheit (57);
wobei das Verfahren durch den folgenden Schritt gekennzeichnet ist:
d) Umschalten des Lufteinlasses des HLK-Systems (5) durch die HLK-Steuereinheit (57) bei Empfang des zweiten Signals und in einem Fall, in dem der Lufteinlass mit dem Außeneinlass (51) verbunden ist, von einer Verbindung mit dem Außeneinlass (51) zu einer Verbindung mit dem Inneneinlass (56).

2. Verfahren nach Anspruch 1, umfassend den weiteren Schritt:
- Stoppen des HLK-Systems (5) nach dem Verbinden des Lufteinlasses mit dem Inneneinlass (56) gemäß Schritt d).

3. Verfahren nach Anspruch 1 oder 2, umfassend den weiteren Schritt:
- Senden eines dritten Signals durch die zentrale Steuereinheit (11) nach Empfang des ersten Signals an ein HLK-System (24) des Batteriepacks (2), um die Batterien zu kühlen, und/oder an ein Löschsystem, um einen möglichen Brand zu löschen.

4. Verfahren nach einem der vorstehenden Ansprüche, umfassend den weiteren Schritt:
- Ausgeben eines Alarms im Fahrgastraum (3) nach der Erkennung, dass mindestens eine der Batterien des Batteriepacks (2) sich in einem abnormalen oder gefährlichen Zustand befindet oder in einen solchen gerät.

5. Verfahren nach Anspruch 4, wobei der im Fahrgastraum (3) ausgegebene Alarm ein sichtbarer Alarm und/oder ein hörbarer Alarm ist.

6. System zum Verhindern des Ansaugens von kontaminierter Umgebungsluft (4) in einen Fahrgastraum (3) eines Fahrzeugs (1) mit einem Fahrgastraum (3) und einem Batteriepack (2) mit mehreren Batterien, wobei das System Folgendes umfasst:
- eine Batteriemanagementeinheit (21);
- eine zentrale Steuereinheit (11);
- ein HLK-System (5) für den Fahrgastraum (3), wobei das HLK-System (5) Folgendes aufweist: eine HLK-Steuereinheit (57), einen Lufteinlass, einen Außeneinlass (51) zum Ansaugen von Umgebungsluft (4), einen Inneneinlass (56) zum Ansaugen von Luft aus dem Inneren des Fahrgastraums (3);
wobei der Lufteinlass des HLK-Systems (5) zwischen einem Zustand, in dem er mit dem Außeneinlass (51) verbunden ist, und einem Zustand, in dem er mit dem Inneneinlass (56) verbunden ist, umgeschaltet werden kann; und
wobei:
- die Batteriemanagementeinheit (21) dazu konfiguriert ist, zu erkennen, ob sich mindestens eine der Batterien des Batteriepacks (2) in einem abnormalen oder gefährlichen Zustand befindet oder in einen solchen gerät;
- die Batteriemanagementeinheit (21) ferner dazu konfiguriert ist, bei Erkennung eines abnormalen oder gefährlichen Zustands gemäß Schritt a) ein erstes Signal an die zentrale Steuereinheit (11) zu senden;
- die zentrale Steuereinheit (11) dazu konfiguriert ist, bei Empfang des ersten Signals ein zweites Signal an die HLK-Steuereinheit (57) zu senden; und
**dadurch gekennzeichnet, dass**
- die HLK-Steuereinheit (57) dazu konfiguriert ist, bei Empfang des zweiten Signals und in einem Fall, in dem der Lufteinlass mit dem Außeneinlass (51) verbunden ist, den Lufteinlass des HLK-Systems (5) von der Verbindung mit dem Außeneinlass (51) zur Verbindung mit dem Inneneinlass (56) umzuschalten.

7. System nach Anspruch 6,
wobei der Lufteinlass einen Schalter zum Umschalten zwischen einem Zustand, in dem der Lufteinlass mit dem Außeneinlass (51) verbunden ist, und einem Zustand, in dem der Lufteinlass mit dem Inneneinlass (56) verbunden ist, umfasst.

8. System nach Anspruch 7, wobei der Schalter ein Schaltventil (52) ist.

9. System nach Anspruch 7, wobei der Schalter Folgendes umfasst:
- ein erstes Ventil zum Öffnen und Schließen einer Verbindung des Außeneinlasses (51) mit dem Lufteinlass;
- ein zweites Ventil zum Öffnen und Schließen einer Verbindung des Inneneinlasses (56) mit dem Lufteinlass;
wobei in einem Zustand des Schalters das erste Ventil die Verbindung des Außeneinlasses (51) mit dem Lufteinlass geöffnet hat und das zweite Ventil die Verbindung des Inneneinlasses (56) mit dem Lufteinlass geschlossen hat; und
wobei in einem anderen Zustand des Schalters das erste Ventil die Verbindung des Außeneinlasses (51) mit dem Lufteinlass geschlossen hat und das zweite Ventil die Verbindung des Inneneinlasses (56) mit dem Lufteinlass geöffnet hat.

10. System nach einem der Ansprüche 6 bis 9, wobei der Lufteinlass ferner mindestens eines der folgenden Elemente umfasst:
- einen Filter (54) zum Herausfiltern von Schmutzstoffen und/oder giftigen Substanzen aus der durch den Lufteinlass angesaugten Luft;
- einen Ventilator (53) zum Ansaugen von Luft durch den Lufteinlass;
- einen Lüftungsauslass (55) zum Zuführen der durch den Lufteinlass angesaugten Luft in den Fahrgastraum (3).

11. System nach einem der Ansprüche 6 bis 10, wobei die HLK-Steuereinheit (57) ferner so konfiguriert ist, dass sie das HLK-System (5) stoppt, nachdem eine Verbindung des Lufteinlasses mit dem Inneneinlass (56) hergestellt wurde.

12. System nach einem der Ansprüche 6 bis 11, wobei der Batteriepack (2) ein HLK-System (24) umfasst, wobei das HLK-System (24) des Batteriepacks (2) dazu konfiguriert ist,
- ein Signal von der zentralen Steuereinheit (11) zu empfangen; und
- nach dem Empfang eines Signals von der zentralen Steuereinheit (11) die Batterien zu kühlen.

13. System nach einem der Ansprüche 6 bis 12, wobei der Batteriepack (2) ein Löschsystem umfasst, wobei das Löschsystem des Batteriepacks (2) dazu konfiguriert ist,
- ein Signal von der zentralen Steuereinheit (11) zu empfangen; und
- einen möglichen Brand des Batteriepacks (2) oder im Batteriepack (2) zu löschen.

14. System nach einem der Ansprüche 6 bis 13, umfassend ferner mindestens eine im Fahrgastraum (3) installierte Alarmeinrichtung,
wobei die mindestens eine Alarmeinrichtung dazu konfiguriert ist, nach der Erkennung, dass mindestens eine der Batterien des Batteriepacks (2) sich in einem abnormalen oder gefährlichen Zustand befindet oder in einen solchen gerät, einen Alarm im Fahrgastraum (3) auszugeben.

15. System nach Anspruch 14, wobei eine Alarmeinrichtung dazu konfiguriert ist, einen sichtbaren Alarm auszugeben, und/oder wobei eine Alarmeinrichtung dazu konfiguriert ist, einen hörbaren Alarm auszugeben.

## Revendications

1. Procédé permettant d'empêcher l'admission d'air ambiant contaminé (4) dans un habitacle (3) d'un véhicule (1), le véhicule (1) comportant : un habitacle (3) ; un bloc-batterie (2) présentant une pluralité de batteries ; une unité de gestion de batterie (21) ; une unité de commande centrale (11) ; un système HVAC (5) pour l'habitacle (3) ; dans lequel le système HVAC (5) présente : une unité de commande HVAC (57), une entrée d'air, une entrée extérieure (51) d'admission d'air ambiant (4), une entrée intérieure (56) d'admission d'air provenant de l'intérieur de l'habitacle (3) ; dans lequel le procédé comporte les étapes suivantes :
a) la détection, par l'unité de gestion de batterie (21), si au moins l'une des batteries du bloc-batterie (2) est dans ou passe à un état anormal ou dangereux ;
b) l'envoi, par l'unité de gestion de batterie (21), d'un premier signal à l'unité de commande centrale (11) lorsqu'un état anormal ou dangereux est détecté selon l'étape a) ;
c) l'envoi, par l'unité de commande centrale (11) lorsque le premier signal est reçu, d'un deuxième signal à l'unité de commande HVAC (57) ;
le procédé étant **caractérisé par** l'étape de :
d) commutation, par l'unité de commande HVAC (57) lorsque le deuxième signal est reçu et si l'entrée d'air est raccordée à l'entrée extérieure (51), de l'entrée d'air du système HVAC (5) de raccordée à l'entrée extérieure (51) à raccordée à l'entrée intérieure (56).

2. Procédé selon la revendication 1, comportant en outre l'étape de :
- arrêt, après raccordement de l'entrée d'air à l'entrée intérieure (56) selon l'étape d), du système HVAC (5).

3. Procédé selon la revendication 1 ou **2,** comportant en outre l'étape de :
- envoi, par l'unité de commande centrale (11) après réception du premier signal, **d'un** troisième signal à un système HVAC (24) du bloc-batterie (2) pour refroidir les batteries et/ou à un système d'extinction pour éteindre un éventuel incendie.

4. Procédé selon l'une quelconque des revendications précédentes, comportant l'étape supplémentaire de :
- émission, après la détection qu'au moins une des batteries du bloc-batterie (2) est dans ou passe à un état anormal ou dangereux, d'une alarme dans l'habitacle (3).

5. Procédé selon la revendication 4, dans lequel l'alarme émise dans l'habitacle (3) est une alarme optique et/ou une alarme sonore.

6. Système permettant d'empêcher l'admission d'air ambiant contaminé (4) dans un habitacle (3) d'un véhicule (1) doté d'un habitacle (3) et d'un bloc-batterie (2) présentant plusieurs batteries, le système comportant :
- une unité de gestion de batterie (21) ;
- une unité de commande centrale (11) ;
- un système HVAC (5) pour l'habitacle (3), le système HVAC (5) présentant : une unité de commande HVAC (57), une entrée d'air, une entrée extérieure (51) pour l'admission d'air ambiant (4), une entrée intérieure (56) pour l'admission d'air provenant de l'intérieur de l'habitacle (3) ;
dans lequel l'entrée d'air du système HVAC (5) est commutable entre un état de raccordement à l'entrée extérieure (51) et un état de raccordement à l'entrée intérieure (56) ; et
dans lequel :
- l'unité de gestion de batterie (21) est configurée pour détecter si au moins l'une des batteries du bloc-batterie (2) est dans ou passe à un état anormal ou dangereux ;
- l'unité de gestion de batterie (21) est en outre configurée pour envoyer, lorsqu'un état anormal ou dangereux est détecté selon l'étape a), un premier signal à l'unité de commande centrale (11) ;
- l'unité de commande centrale (11) est configurée pour envoyer, lorsque le premier signal est reçu, un deuxième signal à l'unité de commande HVAC (57) ; et
**caractérisé en ce que**
- l'unité de commande HVAC (57) est configurée pour commuter, lorsque le deuxième signal est reçu et si l'entrée d'air est raccordée à l'entrée extérieure (51), l'entrée d'air du système HVAC (5) de raccordée à l'entrée extérieure (51) à raccordée à l'entrée intérieure (56).

7. Système selon la revendication 6,
dans lequel l'entrée d'air comporte un commutateur pour commuter entre un état, dans lequel l'entrée d'air est raccordée à l'entrée extérieure (51), et un état, dans lequel l'entrée d'air est raccordée à l'entrée intérieure (56).

8. Système selon la revendication 7, dans lequel le commutateur est une vanne de commutation (52).

9. Système selon la revendication 7, dans lequel le commutateur comporte :
- une première vanne pour ouvrir et fermer une liaison de l'entrée extérieure (51) à l'entrée d'air ;
- une seconde vanne pour ouvrir et fermer une liaison de l'entrée intérieure (56) à l'entrée d'air ;
dans lequel, dans un état du commutateur, la première vanne ouvre la liaison de l'entrée extérieure (51) à l'entrée d'air et la seconde vanne ferme la liaison de l'entrée intérieure (56) à l'entrée d'air ; et
dans lequel, dans un autre état du commutateur, la première vanne ferme la liaison de l'entrée extérieure (51) à l'entrée d'air et la seconde vanne ouvre la liaison de l'entrée intérieure (56) à l'entrée d'air.

10. Système selon l'une quelconque des revendications 6 à 9, dans lequel l'entrée d'air comporte en outre au moins l'un parmi :
- un filtre (54) pour filtrer les polluants et/ou les substances toxiques de l'air aspiré par l'entrée d'air ;
- un ventilateur (53) pour aspirer de l'air à travers l'entrée d'air ;
- une sortie de ventilation (55) pour alimenter l'habitacle (3) en air aspiré par l'entrée d'air.

11. Système selon l'une quelconque des revendications 6 à 10, dans lequel l'unité de commande HVAC (57) est en outre configurée pour arrêter le système HVAC (5) après l'établissement d'une liaison de l'entrée d'air à l'entrée intérieure (56).

12. Système selon l'une quelconque des revendications 6 à 11, dans lequel le bloc-batterie (2) comporte un système HVAC (24), le système HVAC (24) du bloc-batterie (2) étant configuré :
- pour recevoir un signal de l'unité de commande centrale (11) ; et
- pour refroidir, après réception d'un signal de l'unité de commande centrale (11), les batteries.

13. Système selon l'une quelconque des revendications 6 à 12, dans lequel le bloc-batterie (2) comporte un système **d'extinction,** le système **d'extinction** du bloc-batterie (2) étant configuré :
- pour recevoir un signal de l'unité de commande centrale (11) ; et
- pour éteindre un éventuel incendie du bloc-batterie (2) ou dans le bloc-batterie (2).

14. Système selon l'une quelconque des revendications 6 à 13, comportant en outre au moins un moyen **d'alarme** installé dans l'habitacle (3),
dans lequel l'au moins un moyen d'alarme est configuré pour émettre, après la détection qu'au moins une des batteries du bloc-batterie (2) est dans ou passe à un état anormal ou dangereux, une alarme dans l'habitacle (3).

15. Système selon la revendication 14, dans lequel un moyen d'alarme est configuré pour émettre une alarme optique, et/ou un moyen d'alarme est configuré pour émettre une alarme sonore.
